# EUROPEAN PATENT APPLICATION

(11) **EP 4 686 045 A1**
(43) Date of publication of application: **28.01.2026**
(21) Application number: 25153474.9
(22) Date of filing: 23.01.2025
(51) Int. Cl.: H02K 1/20, H02K 21/24, H02K 1/2798, H02K 9/19

(54) **AXIAL FLUX MOTOR AND VEHICLE**

(30) Priority: 23.07.2024 CN 202410986779
(71) Applicant: Xiaomi EV Technology Co., Ltd., Beijing 100176 (CN)
(72) Inventor: CHEN, Jian, Beijing 100176 (CN)
(74) Representative: Stöckeler, Ferdinand

(57) **Abstract**

The present invention relates to an axial flux motor (100) and a vehicle. The axial flux motor includes a housing (1), a stator (2) and a rotor, and the housing (1) is provided with a coolant inlet (11) and a coolant outlet (12); the stator (2) and the rotor are both provided within the housing (1); the stator (2) includes a stator core and a stator winding which is wound around the stator core, and the stator core is provided with a radial passage extending along the radial direction of the stator (2); a first cooling cavity (201) is enclosed between an outer peripheral surface of the stator core and the housing (1); a second cooling cavity (202) is enclosed between an inner peripheral surface of the stator core and the housing (1).

## Description

### FIELD

The present invention relates to the technical field of vehicles, in particular to an axial flux motor and a vehicle.

### BACKGROUND

An axial flux motor is also known as a disk motor, and in related technology, the axial flux motor has the problem of poor cooling effect, which leads to poor overall performance of the axial flux motor.

### SUMMARY

The present invention provides an axial flux motor to improve the overall performance of the axial flux motor.

According to a first aspect of the present invention, there is provided an axial flux motor of the present invention includes a housing, a stator and a rotor, and the housing is provided with a coolant inlet and a coolant outlet; the stator and the rotor are both provided within the housing; the stator includes a stator core and a stator winding, and the stator winding is wound around the stator core, and the stator core is provided with a radial passage extending along a radial direction of the stator; and a first cooling cavity is enclosed between an outer peripheral surface of the stator core and the housing; the coolant inlet and the coolant outlet both communicate with the first cooling cavity; and a second cooling cavity is enclosed between an inner peripheral surface of the stator core and the housing, and both the first cooling cavity and the second cooling cavity communicate with the radial passage.

Optionally, a plurality of radial passages are provided, and the plurality of radial passages are arranged at intervals along a circumferential direction of the stator; a part of the radial passage communicates with the coolant inlet, and the other part of the radial passage communicates with the coolant outlet.

Optionally, the radial passage is a radial through hole

Optionally, a plurality of the radial passages are provided, and the plurality of radial passages are arranged at intervals along the circumferential direction of the stator, and a part of the radial passages are first passages and the other part of the radial passages are second passages; the second cooling cavity communicates with the first cooling cavity through the first passage.

Optionally, the axial flux motor further includes a fixing ring and a connecting piece, and the fixing ring is provided inside the stator core, and the connecting piece passes through the second passage; an inner end of the connecting piece is connected with the fixing ring; and an outer end of the connecting piece is connected with the housing.

Optionally, the second passage is a radial through hole, and the connecting piece and the second passage are positioned and matched along the axial direction of the stator.

Optionally, a cross-sectional area of the second passage is larger than a cross-sectional area of the first passage.

Optionally, a plurality of first passages and a plurality of second passages are provided, and at least one first passage is provided between two adjacent second passages.

Optionally, the fixing ring includes a ring body and a flange, and the flange is provided on an outer peripheral surface of the ring body, and the ring body divides the second cooling cavity into a first cavity and a second cavity, and at least one of the first cavity and the second cavity communicates with the radial passage, the flange is fixedly connected with the inner peripheral surface of the stator core, and the flange is provided with an overflow passage, and the first cavity communicates with the second cavity through the overflow passage.

Optionally, the inner peripheral wall of the housing is provided with a sinking groove, and the outer end of the connecting piece is attached to and connected with the sinking groove.

Optionally, the stator core is provided with a winding groove, and the stator winding is wound in the winding groove, and the radial passage and the winding groove are arranged at intervals along the axial direction of the stator.

Optionally, two groups of winding grooves are provided, and the two groups of winding grooves are respectively provided on two axial sides of the stator, and the radial passage is provided between the two groups of winding grooves, and the stator winding is provided in each winding groove.

Optionally, a projection of the radial passage in the axial direction of the stator overlaps at least a part of the winding groove.

Optionally, the coolant inlet and the coolant outlet are arranged oppositely along the radial direction of the stator.

Optionally, the stator winding includes a coil winding, and the coil winding is wound around the stator core, and the coil winding includes an outer ring body and an inner ring body, and the inner ring body is nested in the outer ring body; the stator includes a bus bar, and one end of the outer ring body is electrically connected with the bus bar, the other end of the outer ring body is electrically connected with one end of the inner ring body, and the other end of the inner ring body is electrically connected with the bus bar.

Optionally, one end of the outer ring body is welded to one end of the inner ring body.

Optionally, the outer ring body includes an outer ring main body, a first outer ring segment and a second outer ring segment, and two ends of the outer ring body are respectively provided on the first outer ring segment and the second outer ring segment; the inner ring body includes an inner ring main body, a first inner ring segment and a second inner ring segment, and two ends of the inner ring body are respectively provided on the first inner ring segment and the second inner ring segment; and the first outer ring segment is electrically connected with the bus bar, the first inner ring segment is electrically connected with the bus bar, and the second outer ring segment is electrically connected with the second inner ring segment.

Optionally, the second outer ring segment and the second inner ring segment are provided on the same side of the outer ring main body in the axial direction of the stator; the second outer ring segment and the second inner ring segment are provided on the same side of the inner ring main body in the axial direction of the stator.

Optionally, the first outer ring segment and the second outer ring segment are respectively provided at two opposite sides of the outer ring main body in the axial direction of the stator; the first inner ring segment and the second inner ring segment are respectively provided at two opposite sides of the inner ring main body in the axial direction of the stator.

Optionally, the first outer ring segment and the first inner ring segment are provided on the same side of the outer ring main body in the axial direction of the stator, and the first outer ring segment and the first inner ring segment are provided on the same side of the inner ring main body in the axial direction of the stator.

Optionally, two groups of coil windings are provided, and the two groups of coil windings are arranged at intervals along the axial direction of the stator; the stator includes an outlet row, and the bus bar is electrically connected with the outlet row, and the outlet row is provided between the two groups of coil windings in the axial direction of the stator.

Optionally, two groups of bus bars are provided, and the two groups of bus bars are provided between two groups of coil windings in the axial direction of the stator.

Optionally, the rotor includes: a rotor disk and a magnetic steel, and the rotor disk including a first bracket and a second bracket, and the second bracket is provided at one side of the first bracket in the axial direction of the stator and is connected with the first bracket; the first bracket is provided with a first clamping portion, and the second bracket is provided with a second clamping portion; and the magnetic steel is clamped between the first clamping portion and the second clamping portion in the axial direction of the stator.

Optionally, the first bracket is provided with a snap groove, and a notch of the snap groove faces the radial outside of the rotor, and the second bracket is provided with a snap protrusion, and the snap protrusion is provided in the snap groove.

Optionally, a dimension of the snap groove in the circumferential direction of the stator is larger than a dimension of the snap protrusion in the circumferential direction of the stator; the first bracket is provided with an mounting groove, and the mounting groove communicates with the snap groove and is used for the snap protrusion to pass through along the radial direction of the rotor.

Optionally, the snap groove is annular, a plurality of mounting grooves and a plurality of snap protrusions are provided, and the plurality of the mounting grooves are arranged at intervals along the circumferential direction of the stator, and the mounting grooves are in one-to-one correspondence to the snap protrusions, and the mounting grooves is used for the corresponding snap protrusions to pass through along the radial direction of the rotor.

Optionally, the first bracket includes a first ring body and a plurality of first clamping strips, and the plurality of first clamping strips are arranged at intervals along the circumferential direction of the first ring body, and the first clamping portion is provided on the first clamping strip; the second bracket includes a second ring body and a plurality of second clamping strips, and the plurality of second clamping strips are arranged at intervals along the circumferential direction of the second ring body, and the second ring body is connected with the first ring body, and the second clamping portion is provided on the second clamping strip.

Optionally, the first clamping strip is provided with a limiting portion, and the limiting portion abuts against the magnetic steel along the circumferential direction of the stator.

Optionally, the first clamping strip and the second clamping strip are alternately arranged at intervals along the circumferential direction of the stator.

Optionally, the magnetic steel is provided with a limiting groove, and the second clamping strip is provided in the limiting groove.

According to a second aspect of the present invention, a vehicle according to embodiments of the present invention includes the axial flux motor described in any one of the above embodiments.

When the axial flux motor according to the present invention is used, the coolant can enter the first cooling cavity from the coolant inlet of the housing. Then, a part of the coolant in the first cooling cavity flows along the outer ring of the stator core under the action of gravity, so as to realize cooling and heat dissipation for the outer side of the stator core, and the coolant finally flow out from the coolant outlet; Another part of the coolant in the first cooling cavity enters the second cooling cavity through the radial passage, so as to realize cooling and heat dissipation for the inner side of the stator core and the stator winding, and the coolant finally flows out from the coolant outlet through the radial passage to form a complete cooling loop, so as to improve the cooling and heat dissipation for the stator, thereby improving the overall performance of the axial flux motor.

### BRIEF DESCRIPTION OF THE DRAWINGS

FIG. 1 is a perspective view of an axial flux motor according to an embodiment of the present invention.
FIG. 2 is another perspective view of the axial flux motor according to an embodiment of the present invention.
FIG. 3 is a sectional view of an axial flux motor according to an embodiment of the present invention.
FIG. 4 is an exploded view of an axial flux motor according to an embodiment of the present invention.
FIG. 5 is a perspective view of a stator core in an axial flux motor according to an embodiment of the present invention.
FIG. 6 is a sectional view of a stator core in an axial flux motor according to an embodiment of the present invention.
FIG. 7 is a flow path diagram of a coolant in an axial flux motor according to an embodiment of the present invention.
FIG. 8 is an exploded view of a stator assembly in an axial flux motor according to an embodiment of the present invention.
FIG. 9 is a schematic structural view of an axial flux motor in which a first pressing plate of a stator assembly is hidden according to an embodiment of the present invention.
FIG. 10 is an enlarged view at part A in FIG. 9.
FIG. 11 is a schematic structural view of an axial flux motor in which a first pressing plate and a fixing ring of a stator assembly is hidden according to an embodiment of the present invention.
FIG. 12 is a schematic diagram of an assembly structure of a stator and a connecting piece in an axial flux motor according to an embodiment of the present invention.
FIG. 13 is an exploded view of a stator in an axial flux motor according to an embodiment of the present invention.
FIG. 14 is a schematic structural view of a first coil in an axial flux motor according to an embodiment of the present invention.
FIG. 15 is an exploded view of a first coil in an axial flux motor according to an embodiment of the present invention.
FIG. 16 is a schematic structural view of a second coil in an axial flux motor according to an embodiment of the present invention.
FIG. 17 is an exploded view of a second coil in an axial flux motor according to an embodiment of the present invention.
FIG. 18 is a perspective view of a rotor in an axial flux motor according to an embodiment of the present invention.
FIG. 19 is another perspective view of a rotor in an axial flux motor according to an embodiment of the present invention.
FIG. 20 is an exploded view of a rotor in an axial flux motor according to an embodiment of the present invention.
FIG. 21 is a front view of a rotor in an axial flux motor according to an embodiment of the present invention.
FIG. 22 is a sectional view along B-B of FIG. 21.
FIG. 23 is a perspective view of a first bracket in an axial flux motor according to an embodiment of the present invention.
FIG. 24 is another perspective view of a first bracket in an axial flux motor according to an embodiment of the present invention.
FIG. 25 is a perspective view of a second bracket in an axial flux motor according to an embodiment of the present invention.
FIG. 26 is a perspective view of a magnetic steel in an axial flux motor according to an embodiment of the present invention.

### DETAILED DESCRIPTION

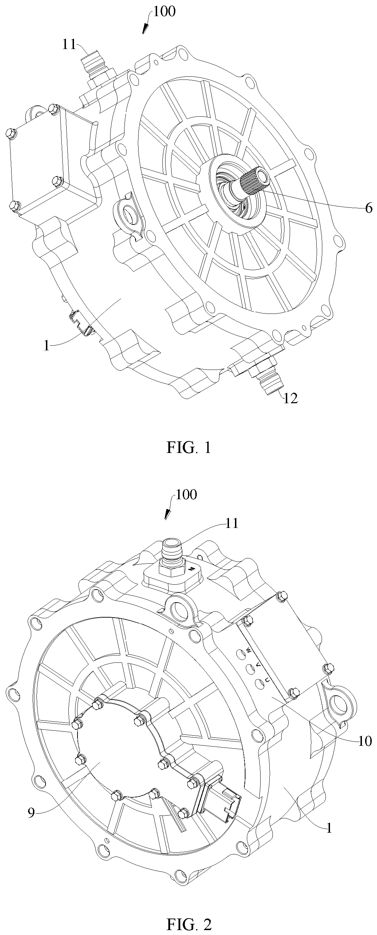

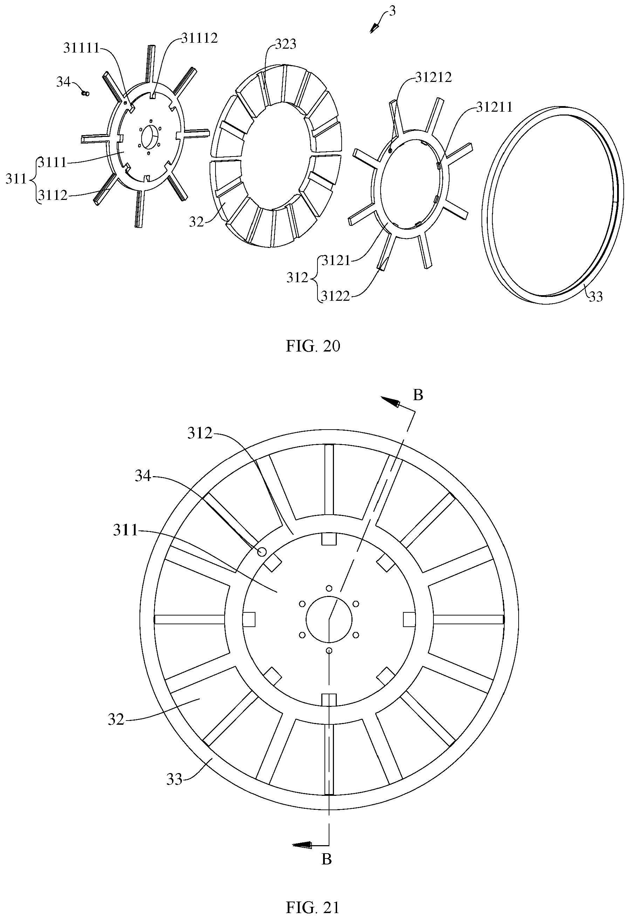

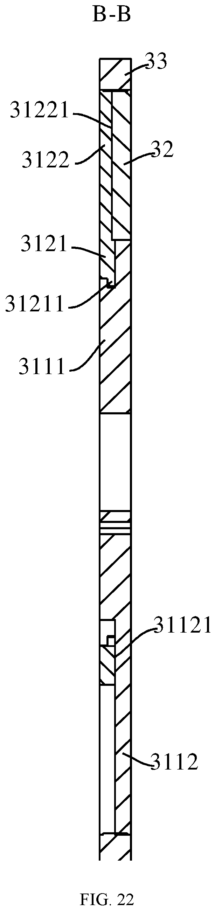

Hereinafter, embodiments of the present invention will be described in detail with reference to FIGS. 1 to 26, examples of which are shown in the accompanying drawings. The embodiments described below by referring to the accompanying drawings are illustrative and are intended to explain the present invention, and should not be construed as limiting the present invention.

As shown in FIGS. 1 to 7, an axial flux motor 100 according to an embodiment of the present invention includes a housing 1, a stator 2 and a rotor 3, and the housing 1 is provided with a coolant inlet 11 and a coolant outlet 12, and both the stator 2 and the rotor 3 are provided in the housing 1. The stator 2 includes a stator core 21 and a stator winding 22, and the stator winding 22 is wound around the stator core 21. The stator core 21 is provided with a radial passage 211 extending along the radial direction of the stator 2. A first cooling cavity 201 is enclosed between the outer peripheral surface of the stator core 21 and the housing 1, and the coolant inlet 11 and the coolant outlet 12 both communicate with the first cooling cavity 201. A second cooling cavity 202 is defined between the inner peripheral surface of the stator core 21 and the housing 1, and both the first cooling cavity 201 and the second cooling cavity 202 communicate with the radial passage 211.

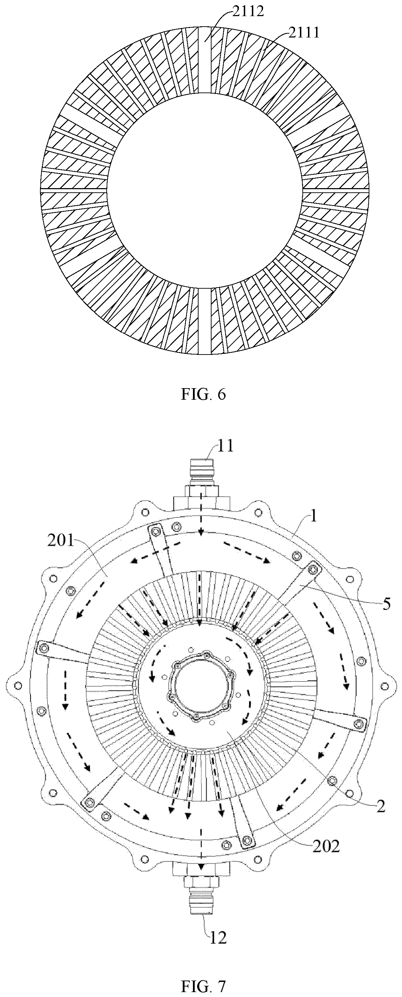

As shown in FIG. 7, when the axial flux motor 100 according to embodiments of the present invention is used, the coolant can enter the first cooling cavity 201 from the coolant inlet 11 of the housing 1. Then a part of the coolant in the first cooling cavity 201 flows along the outer ring of the stator core 21 under the action of gravity, so as to cool and dissipate heat for the outside of the stator core 21 and the coolant finally flows out from the coolant outlet 12. Another part of the coolant in the first cooling cavity 201 enters the second cooling cavity 202 through the radial passage 211, so as to realize cooling and heat dissipation for the inner side of the stator core 21 and the stator winding 22, and finally the coolant flows out from the coolant outlet 12 through the radial passage 211, forming a complete cooling circuit, thus improving the cooling and heat dissipation of the stator 2, and thus improving the overall performance of the axial flux motor 100.

The coolant can be cooling oil, which can not only cool the stator 2, but also lubricate the internal components of the axial flux motor 100.

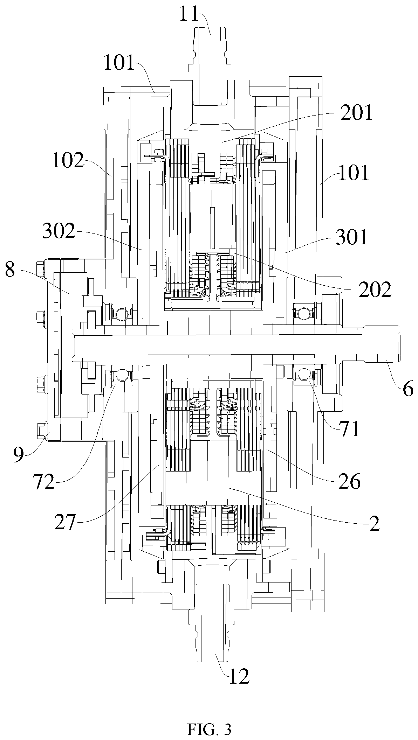

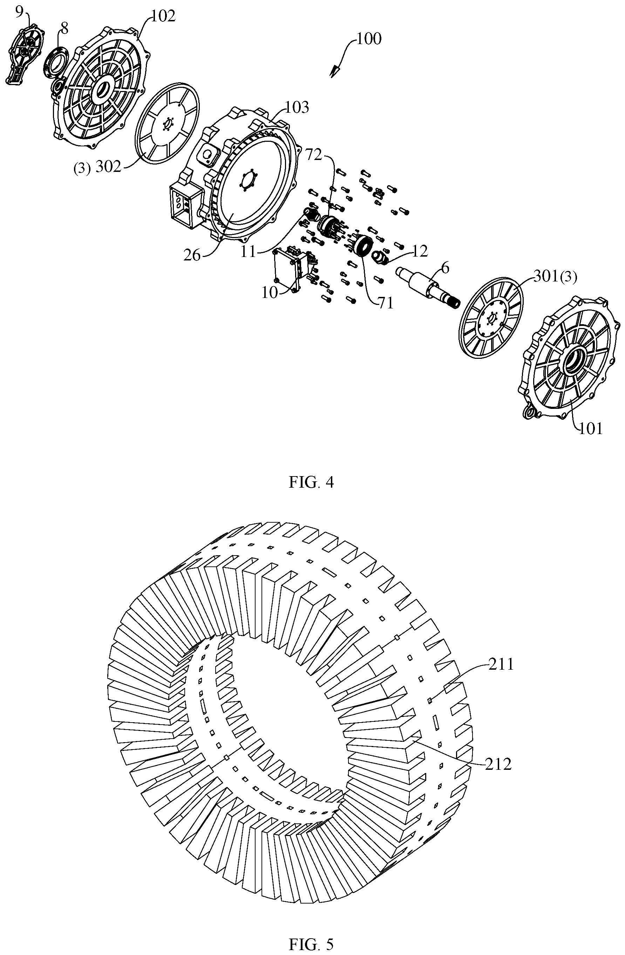

As shown in FIGS. 3 and 4, the housing 1 includes a first end cover 101, a second end cover 102 and a housing body 103. The first end cover 101 and the second end cover 102 are provided on two opposite sides of the housing body 103 in the axial direction of the stator 2, and the first end cover 101, the second end cover 102 and the housing body 103 enclose a closed mounting cavity, and both the stator 2 and the rotor 3 are arranged in the mounting cavity. The first end cover 101 and the second end cover 102 can be connected with the housing body 103 by bolts.

In some embodiments, a plurality of radial passages 211 are provided, and the plurality of radial passages 211 are arranged at intervals along the circumferential direction of the stator 2. A part of the radial passages 211 communicate with the coolant inlet 11, and the other part of the radial passages 211 communicates with the coolant outlet 12.

By setting a plurality of radial passages 211, the coolant inlet 11 and the coolant outlet 12 can communicate with different radial passages 211, and it is possible to prevent the coolant flowing into the first cooling cavity 201 from mixing with the coolant flowing out of the first cooling cavity 201.

On the one hand, the temperature of the coolant flowing into the first cooling cavity 201 is low, and the temperature of the coolant flowing out of the first cooling cavity 201 is high, so that the cooling and heat dissipation effect of the stator 2 can be improved, and the overall performance of the axial flux motor 100 can be further improved; On the other hand, the formation of a flow dead zone in the first cooling cavity 201 can be avoided, so that the cooling and heat dissipation effect of the stator 2 can be improved, and the overall performance of the axial flux motor 100 can be further improved.

Optionally, as shown in FIG. 5, the radial passage 211 is a radial through hole.

For example, the radial passage 211 may be at least one of a circular hole, a square hole and a rectangular hole.

Setting the radial passage 211 as a radial through hole is beneficial to improve the structural strength of the stator core 21, thereby improving the reliability of the stator 2 and further improving the reliability of the axial flux motor 100.

In some embodiments, as shown in FIG. 6, a plurality of radial passages 211 are provided, and the plurality of radial passages 211 are arranged at intervals along the circumferential direction of the stator 2, and a part of the radial passages 211 are first passages 2111 and the other part of the radial passages 211 are second passages 2112. The second cooling cavity 202 communicates with the first cooling cavity 201 through the first passage 2111.

The second cooling cavity 202 communicates with the first cooling cavity 201 through the first passage 2111, so that the second passage 2112 can be used as other functions, thereby effectively improving the performance of the stator 2 and further improving the performance of the axial flux motor 100.

Optionally, as shown in FIG. 7 to FIG. 12, the axial flux motor 100 further includes a fixing ring 4 and a connecting piece 5, and the fixing ring 4 is provided inside the stator core 21, and the connecting piece 5 passes through the second passage 2112, the inner end of the connecting piece 5 is connected with the fixing ring 4, and the outer end of the connecting piece 5 is connected with the housing 1.

By passing the connecting piece 5 through the second passage 2112 and connecting the inner end of the connecting piece 5 with the fixing ring 4, the outer end of the connecting piece 5 is connected with the housing 1, so that the stator core 21 can be fixedly connected with the housing 1 through the connecting piece 5, to conveniently realize the installation and fixation of the stator core 21 in the housing 1.

In the related arts, in order to fix the stator core in the housing, a plurality of connecting pieces extending in the radial direction are adopted, and the connecting pieces pass through the grooves of the stator core from its outside, and the outer side of the connecting pieces is fixed with the bracket on the outer side of the stator core, and the inner side of the connecting pieces is fixed with the bracket on the inner side of the stator core. The groove is provided with a notch facing the axial direction of the stator, which can only realize the unidirectional fixation of the stator core in the axial direction of the stator, but can not be fixed in the direction where the notch is located, and the overall fixation reliability of the stator core is poor, and there is a problem of movement in the opposite direction.

Optionally, the second passage 2112 is a radial through hole, and the connecting piece 5 is positioned and matched with the second passage 2112 along the axial direction of the stator 2.

By setting the second passage 2112 as a radial through hole, the connecting piece 5 and the second passage 2112 are positioned and matched along the axial direction of the stator 2, so that the stator core 21 can be fixed in two directions, the problem of the stator core moving in the opposite direction can be solved, and the connection reliability between the stator 2 and the housing 1 can be improved, thereby improving the reliability of the axial flux motor 100.

Optionally, as shown in FIG. 6, the cross-sectional area of the second passage 2112 is larger than the cross-sectional area of the first passage 2111.

The cross-sectional area of the second passage 2112 can be understood as the projected area of the second passage 2112 in the radial direction of the stator 2; the cross-sectional area of the first passage 2111 can be understood as the projected area of the first passage 2111 in the radial direction of the stator 2.

By setting the cross-sectional area of the second passage 2112 to be larger than that of the first passage 2111, the cross-sectional area of the connecting piece 5 can be set to be larger, thereby improving the structural strength of the connecting piece 5, improving the connection reliability between the stator 2 and the housing 1, and further improving the reliability of the axial flux motor 100.

Optionally, as shown in FIG. 6, the number of the first passages 2111 and the second passages 2112 is plural, and at least one first passage 2111 is provided between two adjacent second passages 2112.

At least one first passage 2111 is provided between two adjacent second passages 2112, so that the first passages 2111 are evenly arranged in the circumferential direction of the stator 2, and the coolant flows evenly in the circumferential direction of the stator 2, so that the cooling and heat dissipation uniformity of the stator 2 can be improved, and the performance of the axial flux motor 100 can be further improved.

Optionally, a plurality of first passages 2111 are evenly spaced along the circumferential direction of the stator 2, and second passages 2112 are evenly spaced along the circumferential direction of the stator 2.

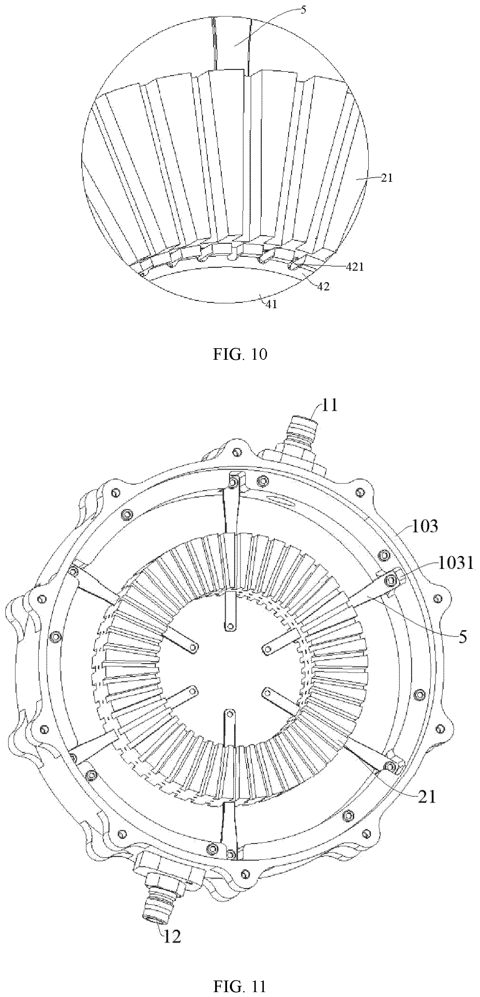

Optionally, as shown in FIG. 10, the fixing ring 4 includes a ring main body 41 and a flange 42, and the flange 42 is provided on the outer peripheral surface of the ring main body 41, and the ring main body 41 divides the second cooling cavity 202 into a first cavity and a second cavity, and at least one of the first cavity and the second cavity communicates with the radial passage 211. The flange 42 is fixedly connected with the inner peripheral surface of the stator core 21, and the flange 42 is provided with an overflow passage 421, and the second cavity communicates with the first cavity through the overflow passage 421.

For example, a plurality of flanges 42 are arranged at intervals along the circumferential direction of the stator 2, and the plurality of flanges 42 are in interference fit with the inner circumferential surface of the stator core 21, and the overflow passage 421 communicating the first cavity and the second cavity is formed between two adjacent flanges 42.

By designing the fixing ring 4 as described above, the connection between the fixing ring 4 and the stator core 21 can be conveniently realized.

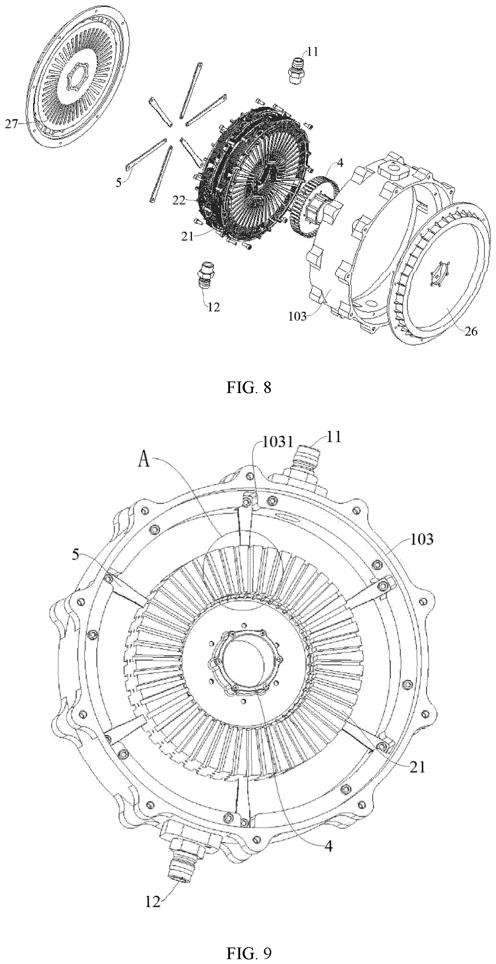

Optionally, as shown in FIGS. 9 and 11, the inner peripheral wall of the housing 1 is provided with a sinking groove 1031, and the outer end of the connecting piece 5 is attached to and connected with the sinking groove 1031.

For example, six connecting pieces 5 are arranged at intervals along the circumferential direction of the stator 2, and six sinking grooves 1031 are arranged at intervals along the circumferential direction of the stator 2. The connecting pieces 5 are in one-to-one correspondence to the sinking grooves 1031, and the outer end of each connecting piece 5 is connected with the corresponding sinking grooves 1031 by a fastener. The fastener can be a bolt, a screw, a rivet, etc.

By providing the inner peripheral wall of the housing 1 with the sinking groove 1031, the outer end of the connecting piece 5 is attached to and connected with the sinking groove 1031, so that the sinking groove 1031 can limit the outer end of the connecting piece 5, preventing the connecting piece 5 from deflecting along the circumferential direction of the stator 2, improving the connection reliability between the connecting piece 5 and the housing 1, and further improving the reliability of the axial flux motor 100.

In some embodiments, as shown in FIGS. 5 and 8, the stator core 21 is provided with a winding groove 212, and the stator winding 22 is wound in the winding groove 212, and the radial passage 211 and the winding groove 212 are arranged at intervals along the axial direction of the stator 2.

For example, the winding groove 212 is provided on one side of the radial passage 211 in the axial direction of the stator 2; or, the winding groove 212 is provided on two opposite sides of the radial passage 211 in the axial direction of the stator 2.

The radial passages 211 and winding grooves 212 are arranged at intervals along the axial direction of the stator 2, which can improve the structural strength of the stator core 21, thereby improving the reliability of the stator 2 and further improving the reliability of the axial flux motor 100.

Optionally, as shown in FIG. 5, two groups of winding grooves 212 are provided, the two groups of winding grooves 212 are respectively provided on two axial sides of the stator 2, and the radial passages 211 are provided between the two groups of winding grooves 212. Each winding groove 212 is provided with the stator winding 22.

At this time, the axial flux motor 100 is a dual-rotor single-stator motor.

By arranging the radial passage 211 between the two groups of winding grooves 212, the coolant can simultaneously cool and radiate the stator windings 22 in the two groups of winding grooves 212, thus improving the radiating uniformity of the stator 2 and further improving the reliability of the axial flux motor 100.

Optionally, as shown in FIG. 5, the projection of the radial passage 211 in the axial direction of the stator 2 covers at least a part of the winding groove 212.

By covering at least a part of the winding groove 212 with the projection of the radial passage 211 in the axial direction of the stator 2, the coolant flowing through the radial passage 211 can better cool the stator winding 22 in the winding groove 212 and further improve the reliability of the axial flux motor 100.

In some embodiments, as shown in FIGS. 1 to 3, FIG. 7 and FIG. 9, the coolant inlet 11 and the coolant outlet 12 are arranged oppositely along the radial direction of the stator 2.

The coolant inlet 11 and the coolant outlet 12 are arranged oppositely along the radial direction of the stator 2, so that the coolant entering through the coolant inlet 11 flows fully and uniformly in the housing 1 before flowing out from the coolant outlet 12, which can further improve the cooling and heat dissipation effect of the stator 2 and further improve the reliability of the axial flux motor 100.

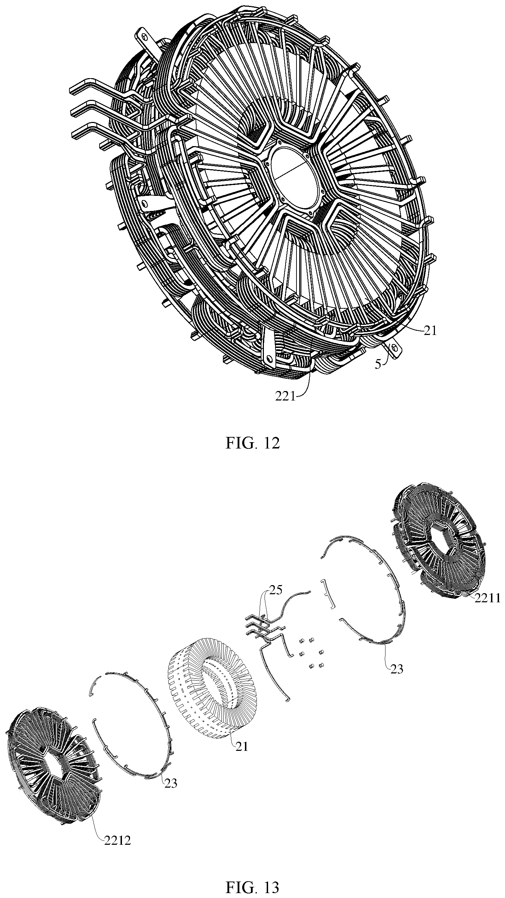

Optionally, as shown in FIGS. 12 to 17, the stator winding 22 includes a coil winding 221, and the coil winding 221 is wound around the stator core 21. The coil winding 221 includes an outer ring body 222 and an inner ring body 223, and the inner ring body 223 is nested in the outer ring body 222. The stator 2 includes a bus bar 23, one end of outer ring body 222 is electrically connected with the bus bar 23, the other end of outer ring body 222 is electrically connected with one end of inner ring body 223, and the other end of inner ring body 223 is electrically connected with the bus bar 23.

For example, two coil windings 221 are connected in series through a bus bar 23. It should be noted that since the coil windings 221 are usually provided with three phases, the number of bus bars 23 is plural, so that the coil windings 221 of different phase lines are connected in series through different bus bars 23.

The stator winding 22 has the above structure, so that the following methods can be adopted when manufacturing the stator winding 22: firstly, one of the wires is bent to form an outer ring body 222 by using a positioning post and a bending machine, and then the other wire is bent to form an inner ring body 223 by using a positioning post and a bending machine, and then the other end of the outer ring body 222 is electrically connected with one end of the inner ring body 223 to form a coil winding 221; then, the outer ring body 222 is electrically connected with the bus bar 23, and the inner ring body 223 is electrically connected with the bus bar 23.

The coil winding 221 makes it possible to form the outer ring body 222 and the inner ring body 223 by bending wires first, and then electrically connect the outer ring body 222 and the inner ring body 223, which makes the molding and manufacturing of the stator winding 22 simple, suitable for mass production, and conducive to reducing the cost of the stator 2, thereby reducing the cost of the axial flux motor 100.

Optionally, two types of coil windings 221 are provided, namely, a first coil and a second coil, and there is a gap between the first coil and the stator core 21, and a part of the second coil extends into the gap, so that the first coil and the second coil partially overlap in the radial direction and/or the axial direction of the stator 2.

By extending a part of the second coil into the gap between the first coil and the stator core 21, the gap between the first coil and the stator core 21 also has a coil structure, thus avoiding the space waste of the stator core 21 and improving the space utilization rate of the stator core 21.

Alternatively, both the first coil and the second coil have planes perpendicular to the axial direction of the stator 2, and the second coil is provided with an avoidance groove, and a part of the first coil passes through the avoidance groove so that the first coil and the second coil partially overlap in the radial direction of the stator 2.

By arranging the avoidance groove in the second coil, a part of the first coil passes through the avoidance groove, so that the first coil and the second coil are partially overlapped in the radial direction of the stator 2, and the performance of the axial flux motor 100 is improved.

Optionally, one end of the outer ring body 222 is welded to one end of the inner ring body 223.

For example, one end of the outer ring body 222 is aligned with one end of the inner ring body 223, and then the outer ring body 222 and the inner ring body 223 are fixed in series to form a coil combination by laser welding or gas shielded welding.

By welding one end of the outer ring body 222 and one end of the inner ring body 223, the outer ring body 222 and the inner ring body 223 can be electrically connected without adding other electrical connecting pieces, which is beneficial to simplifying the structure of the stator winding 22, reducing the manufacturing cost of the stator 2 and further reducing the cost of the axial flux motor 100.

Optionally, as shown in FIGS. 13 to 17, the outer ring body 222 includes an outer ring main body 2221, a first outer ring segment 2222 and a second outer ring segment 2223, and two ends of the outer ring body 222 are respectively provided with the first outer ring segment 2222 and the second outer ring segment 2223. The inner ring body 223 includes an inner ring main body 2231, a first inner ring segment 2232 and a second inner ring segment 2233, and two ends of the inner ring body 223 are respectively provided with the first inner ring segment 2232 and the second inner ring segment 2233. The first outer ring segment 2222 is electrically connected with the bus bar 23, the first inner ring segment 2232 is electrically connected with the bus bar 23, and the second outer ring segment 2223 is electrically connected with the second inner ring segment 2233.

By electrically connecting the first outer ring segment 2222 with the bus bar 23, electrically connecting the first inner ring segment 2232 with the bus bar 23, and electrically connecting the second outer ring segment 2223 with the second inner ring segment 2233, the connection areas between the first outer ring segment 2222 and the bus bar 23, between the first inner ring segment 2232 and the bus bar 23, and between the second outer ring segment 2223 and the second inner ring segment 2233 can be increased, thereby improving the connection reliability between the outer ring body 222 and the bus bar 23, between the outer ring body 222 and the inner ring body 223, and between the inner ring body 223 and the bus bar 23, and improving the reliability of the stator 2, thereby improving the reliability of the axial flux motor 100.

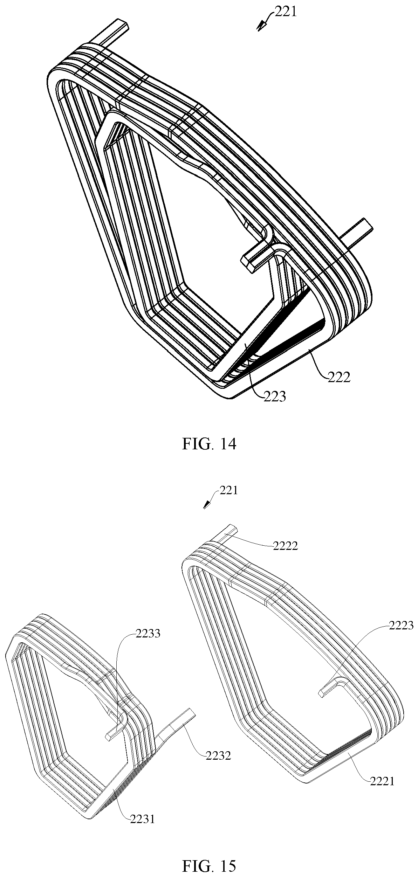

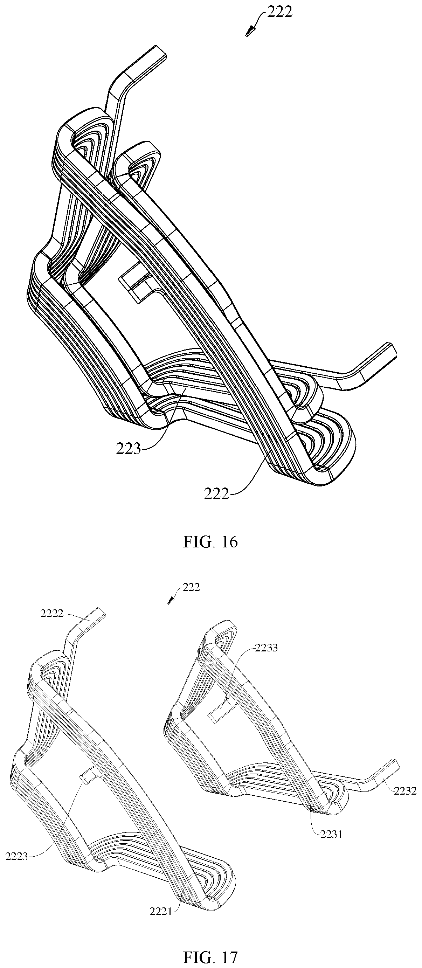

Optionally, as shown in FIGS. 15 and 17, the second outer ring segment 2223 and the second inner ring segment 2233 are provided on the same side of the outer ring main body 2221 in the axial direction of the stator 2. The second outer ring segment 2223 and the second inner ring segment 2233 are provided on the same side of the inner ring main body 2231 in the axial direction of the stator 2.

Therefore, it is convenient to electrically connect the second outer ring segment 2223 and the second inner ring segment 2233, thereby facilitating the processing and manufacturing of the stator 2 and further reducing the cost of the axial flux motor 100.

Optionally, as shown in FIGS. 15 and 17, the first outer ring segment 2222 and the second outer ring segment 2223 are respectively provided at two opposite sides of the outer ring main body 2221 in the axial direction of the stator 2. The first inner ring segment 2232 and the second inner ring segment 2233 are respectively provided at two opposite sides of the inner ring main body 2231 in the axial direction of the stator 2.

For example, both the outer ring main body 2221 and the inner ring main body 2231 have planes perpendicular to the axial direction of the stator 2. The first outer ring segment 2222, the second outer ring segment 2223, the first inner ring segment 2232 and the second inner ring segment 2233 all extend along the axial direction of the stator 2.

Therefore, it is possible to avoid the situation that the first outer ring segment 2222, the second outer ring segment 2223, the first inner ring segment 2232 and the second inner ring segment 2233 are mistakenly connected with the corresponding parts, which further facilitates the processing and manufacturing of the stator 2 and is beneficial to further reducing the cost of the axial flux motor 100.

Optionally, as shown in FIGS. 13, 15 and 17, the first outer ring segment 2222 and the first inner ring segment 2232 are provided at the same side of the outer ring main body 2221 in the axial direction of the stator 2, and the first outer ring segment 2222 and the first inner ring segment 2232 are provided at the same side of the inner ring main body 2231 in the axial direction of the stator 2.

By providing the first outer ring segment 2222 and the first inner ring segment 2232 at the same side of the outer ring main body 2221 in the axial direction of the stator 2, and providing the first outer ring segment 2222 and the first inner ring segment 2232 at the same side of the inner ring main body 2231 in the axial direction of the stator 2, the compactness of the bus bar 23 can be improved, which is beneficial to reducing the volume of the stator 2 and the miniaturization and lightweight design of the axial flux motor 100.

Optionally, as shown in FIGS. 12 and 13, two groups of coil windings 221 are provided, and the two groups of coil windings 221 are arranged at intervals along the axial direction of the stator 2. The stator 2 includes an outlet row 25, and the bus bar 23 is electrically connected with the outlet row 25, and the outlet row 25 is provided between two groups of coil windings 221 in the axial direction of the stator 2.

For example, as shown in FIG. 13, two groups of coil windings 221 are respectively a first coil winding 2211 and a second coil winding 2212, and the first coil winding 2211 and the second coil winding 2212 are respectively arranged on both sides of the stator core 21 in the axial direction of the stator 2.

The overall performance of the axial flux motor 100 can be improved by arranging two groups of coil windings 221 at intervals along the axial direction of the stator 2.

In some embodiments, in the axial direction of the stator 2, the coil windings 221 located on one side of the stator core 21 and in the same phase are sequentially welded through the bus bar 23 to form a series connection, which is combined into a coil of U1 (or V1 or W1); in the axial direction of the stator 2, the coil windings 221 located on the other side of the stator core 21 and in the same phase are sequentially welded through the bus bar 23 to form a series connection, which is combined into a coil of U2 (or V2 or W2), and finally U1 and U2 are welded to form two parallel paths, and finally combined into a U (or V, or W) phase line..

Among the coils connected in series on one side, there are two first coils and two second coils. The first coils and the two second coils are arranged at intervals in sequence, and are connected in series through the bus bar 23 in sequence, and finally end at the outlet row 25, which ensures that the lengths and combinations of windings in each phase are consistent and the resistance values are the same. The outlet row 25 includes three welding points, which are respectively welded with the coil tail ends of U1, V1 and W1, and the one-sided stator winding 22 forms a star connection structure.

Optionally, both the outer ring body 222 and the inner ring body 223 are made of flat copper wire.

As shown in FIGS. 5 and 8, the stator 2 further includes a first pressing plate 26 and a second pressing plate 27, the first pressing plate presses the first coil winding 2211 against the stator core 21 and the second pressing plate 27 presses the second coil winding 2212 against the stator core 21.

As shown in FIG. 4, two rotors 3 are provided, and the two rotors 3 are a first rotor 301 and a second rotor 302, and the first rotor 301 and the second rotor 302 are respectively provided on two sides of the stator 2 in the axial direction. That is, the axial flux motor 100 is a dual-rotor single-stator motor.

By setting two rotors 3, the overall performance of the axial flux motor 100 can be improved.

As shown in FIGS. 3 and 4, the axial flux motor 100 further includes a motor shaft 6, a first bearing 71, a second bearing 72, a rotary transformer stator 8, a rotary transformer cover 9 and a terminal block 10.

The motor shaft 6 passes through and is provided in the stator 2 and the rotor 3, and the stator 2 is rotatably connected with the motor shaft 6 through the first bearing 71 and the second bearing 72. The stator 2 is connected with the motor shaft 6 in a non-rotating manner, and the rotor 3 rotates with the motor shaft 6. The rotary transformer cover plate 9 is connected with the housing 1 to enclose a resolver cavity, and the rotary transformer stator 8 is provided in the resolver cavity. The terminal block 10 is connected with the housing 1, and the outlet row 25 is electrically connected with the terminal block 10.

Optionally, as shown in FIG. 13, two groups of bus bars 23 are provided, and two sets of bus bars 23 are provided between two sets of coil windings 221 in the axial direction of the stator 2.

Two sets of bus bars 23 are provided between two sets of coil windings 221 in the axial direction of the stator 2, so that the distance between the two sets of bus bars 23 is close, which is beneficial to improving the layout compactness of the stator 2 and the miniaturization and lightweight design of the axial flux motor 100.

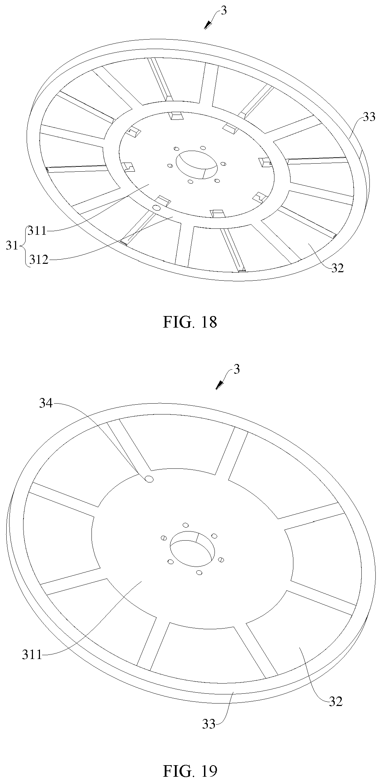

In some embodiments, as shown in FIGS. 18 to 22, the rotor 3 includes a rotor disk 31 and a magnetic steel 32, and the rotor disk 31 includes a first bracket 311 and a second bracket 312, and the second bracket 312 is provided at one side of the first bracket 311 in the axial direction of the stator 2 and connected with the first bracket 311. The first bracket 311 is provided with a first clamping portion 31121, and the second bracket 312 is provided with a second clamping portion 31221. The magnetic steel 32 is clamped between the first clamping portion 31121 and the second clamping portion 31221 in the axial direction of the stator 2.

By setting the rotor disk 31 to include the first bracket 311 and the second bracket 312 which are connected, and providing the first bracket 311 with the first clamping portion 31121, and providing the second bracket 312 with the second clamping portion 31221, the magnetic steel 32 is clamped between the first clamping portion 31121 and the second clamping portion 31221 in the axial direction of the stator 2, to realize the axial limit of the magnetic steel 32. When machining the rotor disk 31, the first clamping portion 31121 needs to be machined on the first bracket 311 and the second clamping portion 31221 needs to be machined on the second bracket 312, which reduces the machining complexity of the rotor disk 31, thus reducing the cost of the axial flux motor 100.

In the related arts, two components in an axial flux motor are usually connected by bolts, which not only has low connection efficiency, but also has the risk that bolt loosens when the rotor runs at high speed, and even falls into the air gap between the rotor and the stator, resulting in the axial flux motor burning out.

In some embodiments, as shown in FIGS. 18 to 21, the second bracket 312 and the first bracket 311 are connected by a rivet 34.

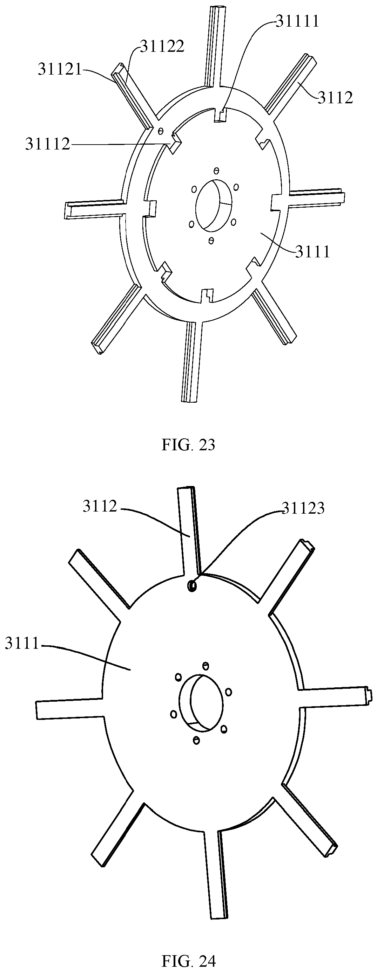

For example, as shown in FIG. 23 to FIG. 25, the first bracket 311 is provided with a first connecting hole 31123, and the second bracket 312 is provided with a second connecting hole 31212. The rivet 34 passes through the first connecting hole 31123 and the second connecting hole 31212, and two ends of the rivet 34 are deformed by pressing the rivet 34 along the axial direction of the rotor 3, so as to realize the connection between the first bracket 311 and the second bracket 312.

The first bracket 311 and the second bracket 312 are connected by a rivet 34, which can not only improve the connection efficiency between the first bracket 311 and the second bracket 312, but also avoid the risk that bolt loosens and falls, improving the reliability of the axial flux motor 100.

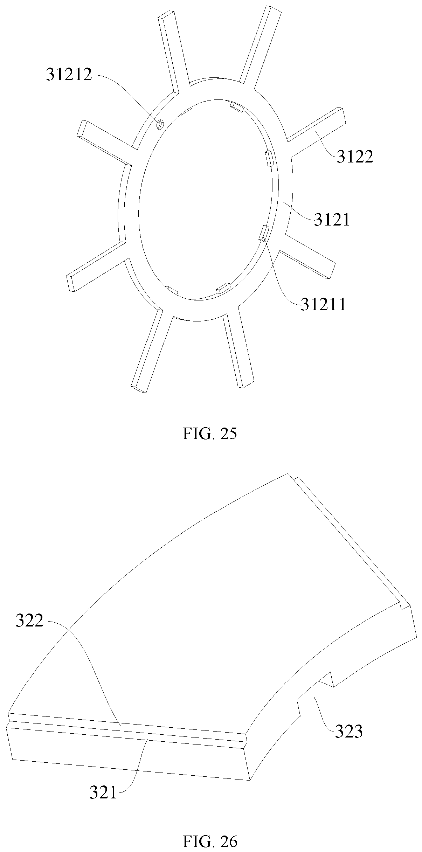

Optionally, as shown in FIGS. 23 and 24, the first bracket 311 includes a first ring body 3111 and a plurality of first clamping strips 3112, the plurality of first clamping strips 3112 are arranged at intervals along the circumferential direction of the first ring body 3111, and the first clamping portion 31121 is provided on the first clamping strips 3112. As shown in FIG. 25, the second bracket 312 includes a second ring body 3121 and a plurality of second clamping strips 3122, and the plurality of second clamping strips are arranged at intervals along the circumferential direction of the second ring body 3121, the second ring body 3121 is connected with the first ring body 3111, and the second clamping portion 31221 is provided on the second clamping strips 3122.

For example, both the number of the first clamping strips 3112 and the number of the second clamping strips 3122 are eight, and the eight first clamping strips 3112 are evenly spaced along the circumferential direction of the stator 2, and the eight second clamping strips 3122 are evenly spaced along the circumferential direction of the stator 2.

By setting the first bracket 311 to include the first ring body 3111 and the plurality of first clamping strips 3112, and setting the second bracket 312 to include the second ring body 3121 and the second clamping strip 3122, with the first ring body 3111 being connected with the second ring body 3121, the connection between the first bracket 311 and the second bracket 312 is realized, and with the magnetic steel 32 being clamped by the first clamping strip 3112 and the second clamping strip 3122, the structures of the first bracket 311 and the second bracket 312 are simple, and the processing and manufacturing of the first bracket 311 and the second bracket 312 are convenient, so that the cost of the axial flux motor 100 can be further reduced.

It should be noted that the axial flux motor 100 according to embodiments of the present invention is not limited to the specific shapes of the first bracket 311 and the second bracket 312.

Optionally, as shown in FIG. 23, the first clamping strip 3112 is provided with a limiting portion 31122, and the limiting portion 31122 abuts against the magnetic steel 32 along the circumferential direction of the stator 2.

By providing the first clamping strip 3112 with the limiting portion 31122, and with the limiting portion 31122 being abutted against the magnetic steel 32 along the circumferential direction of the stator 2, the limiting of the magnetic steel 32 along the circumferential direction of the stator 2 is realized, and the manufacturing of the first bracket 311 is facilitated, thereby further reducing the cost of the axial flux motor 100.

Optionally, as shown in FIG. 23, the first clamping strip 3112 includes a first surface and a second surface, the first surface intersects with the second surface, the first surface forms a first clamping portion 31121, and the second surface forms a limiting portion 31122. As shown in FIG. 26, the magnetic steel 32 includes a first limiting surface 321 and a second limiting surface 322, the first limiting surface 321 intersects with the second limiting surface 322, and the first limiting surface 321 ends at and abuts against the first surface and the second limiting surface 322 ends at and abuts against the second surface.

For example, as shown in FIG. 23, the first surface is perpendicular to the second surface, and as shown in FIG. 26, the first limiting surface 321 is perpendicular to the second limiting surface 322.

By forming the first surface of the first clamping strip 3112 as the first clamping portion 31121, and the second surface as the limiting portion 31122, the structure of the first clamping strip 3112 is simple and the manufacturing of the first bracket 311 is convenient, thereby further reducing the cost of the axial flux motor 100.

As shown in FIG. 23, the first clamping strip 3112 has two second surfaces, which are respectively provided on two opposite sides of the first clamping strip 3112 in the circumferential direction of the stator 2. In the two adjacent first clamping strips 3112, each first clamping strip 3112 faces the second surface of the other first clamping strip 3112, and is used for a limiting cooperation with the same magnetic steel 32, so as to limit the magnetic steel 32 in the circumferential direction of the stator 2.

Optionally, the first clamping strips 3112 and the second clamping strips 3122 are alternately arranged at intervals along the circumferential direction of the stator 2.

With the first clamping strips 3112 and the second clamping strips 3122 being alternately arranged along the circumferential direction of the stator 2, the first clamping strips 3112 and the second clamping strips 3122 are respectively clamped at different positions of the magnetic steel 32, and the clamping reliability of the magnetic steel 32 is improved, thereby improving the reliability of the rotor 3 and further improving the reliability of the axial flux motor 100.

Optionally, as shown in FIG. 26, the magnetic steel 32 is provided with a limiting groove 323, and the second clamping strip 3122 is provided in the limiting groove 323.

By providing the second clamping strip 3122 in the limiting groove 323 of the magnetic steel 32, not only the magnetic steel 32 is clamped by the second clamping strip 3122, but also the second clamping strip 3122 can be prevented from protruding out of the magnetic steel 32 along the axial direction of the rotor 3, so that the axial size of the rotor 3 can be reduced, which is beneficial to the thin and light design of the rotor 3.

Optionally, the magnetic steel 32 is bonded to the rotor disk 31.

For example, the first limiting surface 321 and the first clamping portion 31121, the second limiting surface 322 and the limiting portion 31122, and the groove wall of the limiting groove 323 and the second clamping strip 3122 are bonded by glue.

Bonding the magnetic steel 32 to the rotor disk 31 can improve the connection reliability between the magnetic steel 32 and the rotor disk 31, which further improves the reliability of the rotor 3, and further improves the reliability of the axial flux motor 100.

Optionally, as shown in FIG. 23 and FIG. 25, the first bracket 311 is provided with a snap groove 31111, and the notch of snap groove 31111 faces the radial outside of the rotor 3, and the second bracket 312 is provided with a snap protrusion 31211, and the snap protrusion 31211 is provided in the snap groove 3 1111.

For example, the first ring body 3111 is provided with a snap groove 31111, the second ring body 3121 is provided with a snap protrusion 31211, and the snap protrusion 31211 is provided in the snap groove 31111.

By arranging the snap protrusion 31211 in the snap groove 3 1111, the first bracket 311 and the second bracket 312 are limited in the axial direction of the stator 2, and the connection reliability of the first bracket 311 and the second bracket 312 is improved, and the reliability of the rotor 3 is further improved, thereby further improving the reliability of the axial flux motor 100.

Optionally, the size of the snap groove 31111 in the circumferential direction of the stator 2 is larger than the size of the snap protrusion 31211 in the circumferential direction of the stator 2. The first bracket 311 is provided with a mounting groove 31112, and the mounting groove 31112 communicates with the snap groove 31111, and the mounting groove 31112 is used for the snap protrusion 31211 to pass through along the radial direction of the rotor 3.

Specifically, when assembling the first bracket 311 and the second bracket 312, firstly, the snap protrusion 31211 passes through the notch of the mounting groove 31112 along the radial direction of the rotor 3 and enters into the locking groove 31111, and then rotates at a certain angle (for example, 22.5 degrees) along the circumferential direction of the rotor 3, so that the snap protrusion 31211 is staggered from the mounting groove 31112 to prevent the snap protrusion 31211 from coming out of the mounting groove 31111, so as to realize that the first bracket 311 and the second bracket 312 are limited in the axial direction of the rotor 3. Then, the first bracket 311 and the second bracket 312 are connected to realize the stable connection of the first bracket 311 and the second bracket 312.

The mounting groove 31112 facilitates the installation of the snap protrusion 31211 into the snap groove 31111, which is conducive to improving the assembly efficiency of the first bracket 311 and the second bracket 312 and further reducing the cost of the axial flux motor 100.

Optionally, as shown in FIG. 23, the snap grooves 31111 are annular, and the number of the mounting grooves 31112 and the number of the snap protrusions 31211 are multiple, and the plurality of mounting grooves 31112 are arranged at intervals along the circumferential direction of the stator 2. The mounting grooves 31112 are in one-to-one correspondence to the snap protrusions 31211, and the mounting grooves 31112 allow the corresponding snap protrusions 31211 to pass through in the radial direction of the rotor 3.

For example, the number of the mounting grooves 31112 and the number of the snap protrusions 31211 are eight, and the eight mounting grooves 31112 and the eight snap protrusions 31211 are evenly spaced along the circumferential direction of the rotor 3.

Specifically, when assembling the first bracket 311 and the second bracket 312, the snap protrusion 31211 passes through the notch of the corresponding mounting groove 31112 along the radial direction of the rotor 3 and enters into the snap groove 31111.

By setting the snap groove 31111 to be annular and setting the number of the mounting groove 31112 and the number of the snap protrusion 31211 to be plural, the reliability of limiting the first bracket 311 and the second bracket 312 in the axial direction of the rotor 3 can be improved, and the reliability of the axial flux motor 100 can be further improved.

In some embodiments, as shown in FIGS. 18 to 22, the rotor 3 further includes a snap ring 33, which is sleeved on and connected with the rotor disk 31, and the inner circumferential surface of the snap ring 33 abuts against the outer circumferential surface of the magnetic steel 32.

The snap ring 33 can be carbon fiber, and the carbon fiber wraps the outer circumferential surface of the magnetic steel 32, so as to limit the magnetic steel 32 in the radial direction of the stator 2 and prevent the magnetic steel 32 from being separated from the rotor disk 31 under the centrifugal force when the rotor 3 rotates.

By arranging the snap ring 33, the radial limit of the magnetic steel 32 is conveniently realized, and the cost of the axial flux motor 100 is further reduced.

An assembling method of rotor 3 are as follows:
the snap protrusion 31211 of the second bracket 312 passes through the mounting groove 31112 of the first bracket 311 along the radial direction of the stator 2 and enters the snap groove 31111 through the mounting groove 31112;
the second bracket 312 is rotated along the circumferential direction of the stator 2 so that the snap protrusion 31211 is snapped in the snap groove 3 1111, and the second bracket 312 is stop from rotating after the second connecting hole 31212 is aligned with the first connecting hole 31123;
the rivet 34 is inserted into the second connecting hole 31212 and the first connecting hole 31123 along the axial direction of the stator 2, and both sides of the rivet 34 are pressed along the axial direction of the stator 2, so that the rivet 34 is in 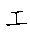 -shape as a whole, thus realizing the connection between the second bracket 312 and the first bracket 311;
glue is coated on the surface of the magnetic steel 32 contacting with the rotor disk 31, and the magnetic steel 32 is inserted between the first clamping strip 3112 and the second clamping strip 3122 along the radial direction of the stator 2;
the snap ring 33 is install on the radial outer side of the magnetic steel 32 to complete the assembly of the rotor 3.

A vehicle according to embodiments of the present invention includes the axial flux motor 100 described in any of the above embodiments. The vehicle can be a pure electric vehicle or a hybrid electric vehicle.

## Claims

1. An axial flux motor (100), comprising:
a housing (1) provided with a coolant inlet (11) and a coolant outlet (12);
a stator (2) and a rotor (3), wherein the stator (2) and the rotor (3) are both provided within the housing (1);
wherein the stator (2) comprises a stator core (21) and a stator winding (22), and the stator winding (22) is wound around the stator core (21), and the stator core (21) is provided with a radial passage (211) extending along a radial direction of the stator (2); and a first cooling cavity (201) is enclosed between an outer peripheral surface of the stator core (21) and the housing (1); the coolant inlet (11) and the coolant outlet (12) both communicate with the first cooling cavity (201); and a second cooling cavity (202) is enclosed between an inner peripheral surface of the stator core (21) and the housing (1), and both the first cooling cavity (201) and the second cooling cavity (202) communicate with the radial passage (211).

2. The axial flux motor (100) according to claim 1, wherein a plurality of radial passages (211) are provided, and the plurality of radial passages (211) are arranged at intervals along a circumferential direction of the stator (2);
wherein a part of the radial passage (211) communicates with the coolant inlet (11), and the other part of the radial passage (211) communicates with the coolant outlet (12).

3. The axial flux motor (100) according to claim 1, wherein the radial passage (211) is a radial through hole.

4. The axial flux motor (100) according to claim 1, wherein a plurality of the radial passages (211) are provided, and the plurality of radial passages (211) are arranged at intervals along the circumferential direction of the stator (2), wherein a part of the radial passages (211) are first passages (2111) and the other part of the radial passages (211) are second passages (2112);
the second cooling cavity (202) communicates with the first cooling cavity (201) through the first passage (2111);
optionally, the axial flux motor (100) further comprises a fixing ring (4) and a connecting piece (5), wherein the fixing ring (4) is provided inside the stator core (21), and the connecting piece (5) passes through the second passage (2112); an inner end of the connecting piece (5) is connected with the fixing ring (4); and an outer end of the connecting piece (5) is connected with the housing (1);

5. The axial flux motor (100) according to claim 4, wherein the second passage (2112) is a radial through hole, and the connecting piece (5) and the second passage (2112) are positioned and matched along the axial direction of the stator (2), and/or
a cross-sectional area of the second passage (2112) is larger than a cross-sectional area of the first passage (2111).

6. The axial flux motor (100) according to claim 4, wherein a plurality of first passages (2111) and a plurality of second passages (2112) are provided, and at least one first passage (2111) is provided between two adjacent second passages (2112), and/or
wherein the fixing ring (4) comprises a ring body (41) and a flange (42), wherein the flange (42) is provided on an outer peripheral surface of the ring body (41), and the ring body (41) divides the second cooling cavity (202) into a first cavity and a second cavity, and at least one of the first cavity and the second cavity communicates with the radial passage (211), the flange (42) is fixedly connected with the inner peripheral surface of the stator core (21), and the flange (42) is provided with an overflow passage (421), and the first cavity communicates with the second cavity through the overflow passage (421).

7. The axial flux motor (100) according to claim 4, wherein the inner peripheral wall of the housing (1) is provided with a sinking groove (1031), and the outer end of the connecting piece (5) is attached to and connected with the sinking groove (1031).

8. The axial flux motor according to claim 1, wherein the stator core (21) is provided with a winding groove (212), wherein the stator winding is wound in the winding groove (212), and the radial passage (211) and the winding groove (212) are arranged at intervals along the axial direction of the stator (2);
optionally, two groups of winding grooves (212) are provided, and the two groups of winding grooves (212) are respectively provided on two axial sides of the stator (2), and the radial passage (211) is provided between the two groups of winding grooves (212), and the stator winding (22) is provided in each winding groove (212), and/or, wherein a projection of the radial passage (211) in the axial direction of the stator (2) overlaps at least a part of the winding groove (212).

9. The axial flux motor (100) according to claim 1, wherein the coolant inlet (11) and the coolant outlet (12) are arranged oppositely along the radial direction of the stator (2).

10. The axial flux motor (100) according to claim 1, wherein the stator winding (22) comprises a coil winding (221), wherein the coil winding (221) is wound around the stator core (21), and the coil winding (221) comprises an outer ring body (222) and an inner ring body (223), and the inner ring body (223) is nested in the outer ring body (222);
the stator (2) comprises a bus bar (23), and one end of the outer ring body (222) is electrically connected with the bus bar (23), the other end of the outer ring body (222) is electrically connected with one end of the inner ring body (223), and the other end of the inner ring body (223) is electrically connected with the bus bar (23);
optionally, wherein one end of the outer ring body (222) is welded to one end of the inner ring body (223).

11. The axial flux motor (100) according to claim 10, wherein the outer ring body (222) comprises an outer ring main body (2221), a first outer ring segment (2222) and a second outer ring segment (2223), wherein two ends of the outer ring body (222) are respectively provided on the first outer ring segment (2222) and the second outer ring segment (2223);
the inner ring body (223) comprises an inner ring main body (2231), a first inner ring segment (2232) and a second inner ring segment (2233), and two ends of the inner ring body (223) are respectively provided on the first inner ring segment (2232) and the second inner ring segment (2233);
wherein the first outer ring segment (2222) is electrically connected with the bus bar (23), the first inner ring segment (2232) is electrically connected with the bus bar (23), and the second outer ring segment (2223) is electrically connected with the second inner ring segment (2233);
optionally, the second outer ring segment (2223) and the second inner ring segment (2233) are provided on the same side of the outer ring main body (2221) in the axial direction of the stator (2); the second outer ring segment (2223) and the second inner ring segment (2233) are provided on the same side of the inner ring main body (2231) in the axial direction of the stator (2), and/or, wherein the first outer ring segment (2222) and the second outer ring segment (2223) are respectively provided at two opposite sides of the outer ring main body (2221) in the axial direction of the stator (2); the first inner ring segment (2232) and the second inner ring segment (2233) are respectively provided at two opposite sides of the inner ring main body (2231) in the axial direction of the stator (2);
optionally, the first outer ring segment (2222) and the first inner ring segment (2232) are provided on the same side of the outer ring main body (2221) in the axial direction of the stator (2), and the first outer ring segment (2222) and the first inner ring segment (2232) are provided on the same side of the inner ring main body (2231) in the axial direction of the stator (2).

12. The axial flux motor (100) according to claim 10, wherein two groups of coil windings (221) are provided, and the two groups of coil windings (221) are arranged at intervals along the axial direction of the stator (2);
the stator (2) comprises an outlet row (25), wherein the bus bar (23) is electrically connected with the outlet row (25), and the outlet row (25) is provided between the two groups of coil windings (221) in the axial direction of the stator (2);
optionally, two groups of bus bars (23) are provided, and the two groups of bus bars (23) are provided between two groups of coil windings (221) in the axial direction of the stator (2).

13. The axial flux motor (100) according to claim 1, wherein the rotor (3) comprises:
a rotor disk (31) comprising a first bracket (311) and a second bracket (312), wherein the second bracket (312) is provided at one side of the first bracket (311) in the axial direction of the stator (2) and is connected with the first bracket (311); the first bracket (311) is provided with a first clamping portion (31121), and the second bracket (312) is provided with a second clamping portion (31221); and
a magnetic steel (32), wherein the magnetic steel (32) is clamped between the first clamping portion (31121) and the second clamping portion (31221) in the axial direction of the stator (2);
optionally, wherein the first bracket (311) is provided with a snap groove (31111), and a notch of the snap groove (31111) faces the radial outside of the rotor (3), and the second bracket (312) is provided with a snap protrusion (31211), and the snap protrusion (31211) is provided in the snap groove (31111);
optionally, a dimension of the snap groove (31111) in the circumferential direction of the stator (2) is larger than a dimension of the snap protrusion (31211) in the circumferential direction of the stator (2);
the first bracket (311) is provided with an mounting groove (31112), and the mounting groove (31112) communicates with the snap groove (31111) and is used for the snap protrusion (31211) to pass through along the radial direction of the rotor (3);
optionally, wherein the snap groove (31111) is annular, a plurality of mounting grooves (31112) and a plurality of snap protrusions (31211) are provided, and the plurality of the mounting grooves (31112) are arranged at intervals along the circumferential direction of the stator (2), and the mounting grooves (31112) are in one-to-one correspondence to the snap protrusions (31211), and the mounting grooves (31112) is used for the corresponding snap protrusions (31211) to pass through along the radial direction of the rotor (3).

14. The axial flux motor (100) according to claim 13, wherein the first bracket (311) comprises a first ring body (3111) and a plurality of first clamping strips (3112), and the plurality of first clamping strips (3112) are arranged at intervals along the circumferential direction of the first ring body (3111), and the first clamping portion (31121) is provided on the first clamping strip (3112);
the second bracket (312) comprises a second ring body (3121) and a plurality of second clamping strips (3122), and the plurality of second clamping strips (3122) are arranged at intervals along the circumferential direction of the second ring body (3121), and the second ring body (3121) is connected with the first ring body (3111), and the second clamping portion (31221) is provided on the second clamping strip (3122);
optionally, the first clamping strip (3112) is provided with a limiting portion (31122), wherein the limiting portion (31122) abuts against the magnetic steel (32) along the circumferential direction of the stator (2), and/or, wherein the first clamping strip (3112) and the second clamping strip (3122) are alternately arranged at intervals along the circumferential direction of the stator (2); optionally, wherein the magnetic steel (32) is provided with a limiting groove (323), and the second clamping strip (3122) is provided in the limiting groove (323).

15. A vehicle comprising the axial flux motor (100) according to any one of claims 1-14.
